# EUROPEAN PATENT APPLICATION

(11) **EP 4 521 061 A1**
(43) Date of publication of application: **12.03.2025**
(21) Application number: 22940807.5
(22) Date of filing: 02.05.2022
(51) Int. Cl.: G01C 3/06

(54) **POSITION ESTIMATION DEVICE, POSITION ESTIMATION METHOD, AND PROGRAM**

(71) Applicant: Eurus Energy Holdings Corporation, Tokyo 105-0001 (JP)
(72) Inventor: NISHIKAWA Takeshi, Kobe-shi, Hyogo 658-0073 (JP)
(74) Representative: Betten & Resch
(86) International application number: PCT/JP2022/019497
(87) International publication number: WO 2023/214445

(57) **Abstract**

A position estimation device (10) includes an image acquisition unit (110) and a position estimation unit (120). The image acquisition unit (110) acquires a plurality of images generated by an imaging device that images a target space that is a space in which a flying object flies. The position estimation unit (120) estimates a position of the flying object by processing the plurality of images. The position estimation unit (120) provisionally sets a type of the flying object and estimates a distance to the flying object and a speed. Then, the position estimation unit (120) updates the type of the flying object by using the speed and a change rate in an area of the flying object in the image. The position estimation unit (120) repeats the processing.

## Description

### TECHNICAL FIELD

The present invention relates to a position estimation device, a position estimation method, and a program.

### BACKGROUND ART

In recent years, structures large in a height direction have been installed in various places, as represented by a wind power generation device. There is a possibility that such a structure is collided with a flying object such as a bird. On the other hand, the device disclosed in Patent Document 1 performs each of a recognition of a flight of a bird, a calculation of a position of the bird that has flown, and an estimation of a presence position of the bird that has flown after a predetermined time from two pieces of image data obtained by the two camera modules, and supplies a sound signal to a plurality of speaker modules such that the sound reaches the estimated position.

### RELATED DOCUMENT

### PATENT DOCUMENT

[Patent Document 1] Japanese Unexamined Patent Publication No. 10-4858

### SUMMARY OF THE INVENTION

### TECHNICAL PROBLEM

In the technique disclosed in Patent Document 1, at least two imaging devices are required to estimate a position of the flying object. An example of an object of the present invention is to enable estimation of a position of a flying object even with one imaging device in consideration of the above-described problems.

### SOLUTION TO PROBLEM

According to an aspect of the present invention, there is provided a position estimation device including an image acquisition unit that acquires a plurality of images generated by an imaging device that images a target space that is a space in which a flying object flies, and a position estimation unit that estimates a position of the flying object by processing the plurality of images, in which the position estimation unit (1) provisionally sets a type of the flying object, (2) specifies three or more of the images arranged in time series as a target image group, (3) estimates a distance from the imaging device to the flying object for each of a plurality of the images included in the target image group by using the provisionally set type and an area of the flying object in the image belonging to the target image group, (4) calculates a change rate in the area of the flying object between the plurality of the images included in the target image group, (5) estimates a speed of the flying object by using the distance to the flying object and a position in the image in each of the plurality of the images included in the target image group, (6) updates the type of the flying object by using the speed and the change rate in the area, and (7) performs processing shown in (2) to (6) again by using the type updated in (6) until a predetermined criterion is satisfied, and an estimated position of the flying object at a timing at which the image is captured is indicated by a position of the flying object in the image and the distance calculated based on the image.

In addition, according to an aspect of the present invention, a method of estimating a position of a flying object by the position estimation device, and a program for implementing the position estimation device are also provided.

### ADVANTAGEOUS EFFECTS OF INVENTION

According to the aspect of the present invention, a position of a flying object can be estimated even with one imaging device.

### BRIEF DESCRIPTION OF THE DRAWINGS

Fig. 1 is a diagram for describing a first example of a use environment of a position estimation device according to an embodiment.
Fig. 2 is a diagram for describing a second example of the use environment of the position estimation device.
Fig. 3 is a diagram showing an example of a functional configuration of the position estimation device.
Fig. 4 is a diagram showing an example of a hardware configuration of the position estimation device.
Fig. 5 is a diagram for describing an example of processing performed by the position estimation device.
Fig. 6 is a diagram for describing step S30.
Fig. 7 is a diagram for describing processing shown in step S20 to step S60 of Fig. 5.
Fig. 8 is a diagram for describing a detailed example of step S90.
Fig. 9 is a diagram for describing a detailed example of the step S90.
Fig. 10 is a diagram for describing a detailed example of the step S90.
Fig. 11 is a diagram for describing a detailed example of the step S90.
Fig. 12 is a diagram for describing a use environment of the position estimation device according to a modification example.
Fig. 13 is a diagram for describing an example of a method of specifying an estimated position of a flying object by the position estimation unit.

### DESCRIPTION OF EMBODIMENTS

Hereinafter, an embodiment of the present invention will be described using the drawings. In all drawings, the same components are designated by the same reference numerals, and description thereof will not be repeated as appropriate.

### (Embodiment)

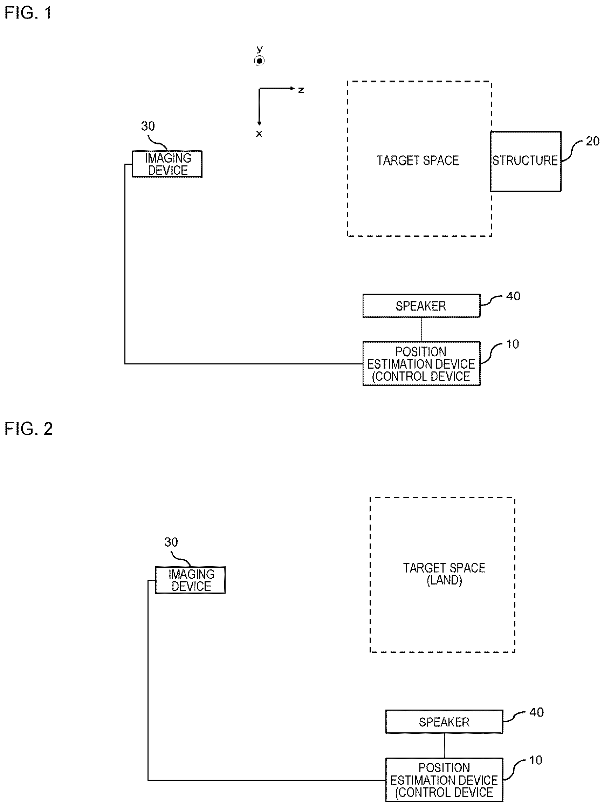

Fig. 1 is a diagram for describing a first example of a use environment of a position estimation device 10 according to an embodiment. In the example shown in the figure, the position estimation device 10 is a device that detects a flying object that is present in a periphery of a structure 20 and estimates a position of the flying object. In the detection and estimation, the position estimation device 10 uses an image generated by one imaging device 30. A target space is included in an imaging range of the imaging device 30. The target space includes a region in which the flying object is not allowed to enter. An example of the region is the periphery of the structure 20. The target space may include the structure 20 or may not include the structure 20. The target space includes, for example, both the structure 20 and a space within 2 km from the structure 20. However, depending on the type of the imaging device 30, the target space can include a space within 10 km from the structure 20.

A representative example of the flying object is an animal such as a bird. However, the flying object may be another object, for example, an airplane, a helicopter, or an object that is lifted by wind.

The structure 20 is, for example, a wind power generation device, but may be other equipment such as an iron tower. When the structure 20 has a mechanical or electrical structure, the structure is controlled by a control device. When the structure 20 is a wind power generation device, the structure is a blade. When a determination is made that the position of the flying object or the transition thereof satisfies a predetermined criterion and there is a possibility of collision with the structure 20, the position estimation device 10 transmits predetermined information (control information described below) to the control device to stop or slow down the movement of the mechanical or electrical structure. Then, the control device slows down or stops the movement of the above-described structure.

The imaging device 30 is a monocular camera. It is preferable that the imaging device 30 has a tilt function, a pan function, and a zoom function (hereinafter, referred to as a TPZ function). It is desirable that the installation position of the imaging device 30 is fixed. In addition, the frame rate of the image generated by the imaging device 30 is optional. The imaging device 30 may transmit, together with the generated image, a setting value of the imaging device 30 when the image is generated, for example, a focal length, to the position estimation device 10.

The installation position of the imaging device 30 may be determined using, for example, simulation. In this case, when an angle of view, an installation position, and a direction of a camera of the imaging device 30 are input to a simulation device, a range in which the imaging device 30 can perform imaging can be calculated. Then, when the calculation result is used, an appropriate installation position of the imaging device 30 can be estimated.

The position estimation device 10 estimates a current position of the flying object and estimates a future position of the flying object. When the flying object is an animal such as a bird, the position estimation device 10 controls a speaker 40 such that the sound reaches the animal at a timing at which the animal reaches the future position. That is, the position estimation device 10 also functions as a control device of the speaker 40. In this case, the position estimation device 10 outputs a sound for transmitting predetermined information to the animal from the speaker 40.

An example of the sound output by the position estimation device 10 to the speaker 40 is a sound for transmitting predetermined information from the same species of the detected animal to the animal or a sound for transmitting predetermined information from the closely related species of the detected animal to the animal.

An example of the predetermined information transmitted by the sound is information that can change the behavior of the animal, for example, a sound for transmitting that a natural enemy is approaching, or a sound for transmitting that a prey is in another place or direction. For example, when the detected animal is an animal on the side of being preyed, the sound output by the speaker 40 is a sound for transmitting that the predator is approaching. On the other hand, when the detected animal is a predator, the sound output by the speaker 40 is a sound for transmitting that an animal that can be preyed upon is in another place. That is, the position estimation device 10 changes the sound according to the type of the detected animal.

It is preferable that the speaker 40 has directivity. An example of the speaker 40 is a parametric speaker. The orientation of the speaker 40 is variable. Then, the position estimation device 10 controls the direction of the speaker 40 such that the emission direction of the speaker 40 is directed toward the future position of the animal.

Fig. 2 is a diagram for describing a second example of the use environment of the position estimation device 10. In the example shown in the figure, the position estimation device 10 controls the speaker 40 to predict the future position of an animal that is trying to invade a specific land (hereinafter, referred to as a target region) and to prevent the animal from invading the target region. In the example shown in the figure, the target animal is, for example, a wild boar, a deer, a monkey, a mouse, or a closely related species thereof, and is an animal that causes so-called wildlife damage. In the case of the example shown in the figure, in the following description, the "flying object" is replaced with "animal".

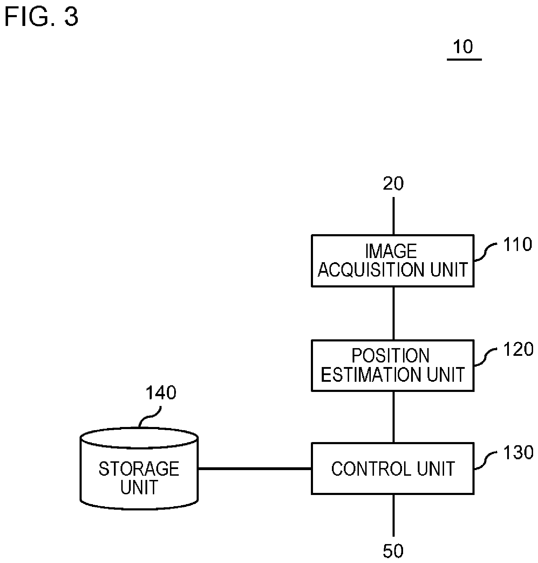

Fig. 3 is a diagram showing an example of a functional configuration of the position estimation device 10. The position estimation device 10 includes an image acquisition unit 110 and a position estimation unit 120. The image acquisition unit 110 acquires a plurality of images captured by the imaging device 30. The position estimation unit 120 estimates the position of the flying object by processing the plurality of images.

The position estimation unit 120 performs the following processing.
(1) The type of the flying object is provisionally set.
(2) Three or more of the images arranged in time series are specified as a target image group,
(3) for each of a plurality of images included in the target image group,
   a distance from the imaging device to the flying object is estimated by using the provisionally set type and an area of the flying object in the image belonging to the target image group,
(4) a change rate in the area of the flying object between the plurality of the images included in the target image group is calculated,
(5) a speed of the flying object is estimated by using the distance to the flying object and a position in the image in each of the plurality of the images included in the target image group,
(6) the type of the flying object is updated using the speed and the change rate in the area, and
(7) the processing shown in (2) to (6) is performed again using the type updated in (6) until a predetermined criterion is satisfied.

Then, the estimated position of the flying object at a timing at which the image is captured is indicated by the position of the flying object in the image and the distance calculated based on the image.

In above-described (3), it is preferable that the position estimation unit 120 uses the focal length used when the imaging device 30 generates the image.

In addition, in (3), the position estimation unit 120 calculates an average value of areas of regions occupied by the flying object between the image currently being processed and at least one other image belonging to the target image group, and estimates a distance using the average value. In this case, the position estimation unit 120 further generates motion information indicating a motion state of the flying object. The motion information includes at least one of a turning radius, an angular velocity, an acceleration, or an angular acceleration when a trajectory of the flying object is approximated to an arc. The center of the turning radius is the position of the imaging device 30. Then, the position estimation unit 120 estimates the future position of the flying object. The future position is an estimation result of the position of the flying object at a first timing in the future. The first timing is a predetermined time after the current time. The predetermined time is, for example, a value of 1/120 seconds or more and 5 seconds or less. It may be longer than the above-mentioned. When the future position is estimated, the position estimation unit 120 uses the position, the speed, and the motion information of the flying object, and time-series information of at least one of these.

The processing performed by the position estimation unit 120 will be described in detail with reference to other figures.

In addition, the position estimation device 10 also functions as a control device that controls the speaker 40, and thus includes a control unit 130 and a storage unit 140.

When the flying object is an animal, the control unit 130 causes the speaker 40 to output a sound for transmitting predetermined information to the animal at the first timing such that the sound reaches the future position. A specific example of the predetermined information is as described with reference to Fig. 1.

The storage unit 140 stores data that is a sound source of the sound output by the speaker 40. Hereinafter, the data will be referred to as sound data. The storage unit 140 stores the sound data for each type of animal, for example, for each species. Then, the control unit 130 reads out the sound data corresponding to the type of the animal detected by the position estimation unit 120 from the storage unit 140 and outputs the sound data from the speaker 40.

In addition, as described with reference to Fig. 1, the speaker 40 has directivity, and the direction of the speaker 40 is variable. The control unit 130 controls the orientation of the speaker 40. As an example, the control unit 130 controls the orientation of the speaker 40 such that the emission direction of the speaker 40 is directed toward the future position of the animal.

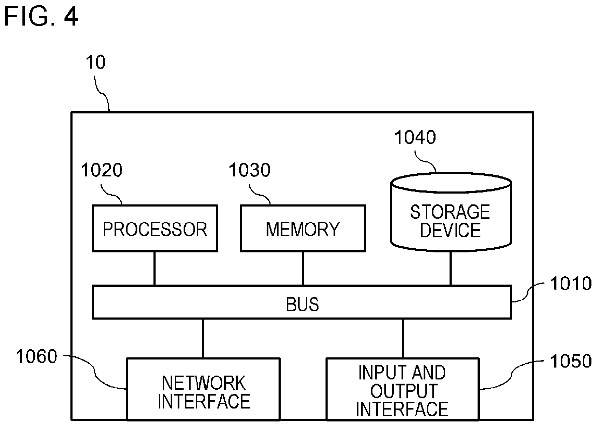

Fig. 4 is a diagram showing an example of a hardware configuration of the position estimation device 10. The position estimation device 10 includes a bus 1010, a processor 1020, a memory 1030, a storage device 1040, an input and output interface 1050, and a network interface 1060.

The bus 1010 is a data transmission path for transmitting and receiving data between the processor 1020, the memory 1030, the storage device 1040, the input and output interface 1050, and the network interface 1060. However, a method for connecting the processor 1020 or the like is not limited to bus connection.

The processor 1020 is a processor implemented by a central processing unit (CPU), a graphics processing unit (GPU), or the like.

The memory 1030 is a main storage device that is implemented using a random access memory (RAM) or the like.

The storage device 1040 is an auxiliary storage device that is implemented using a hard disk drive (HDD), a solid state drive (SSD), removable media such as a memory card, a read only memory (ROM), or the like. The storage device 1040 stores a program module that implements each function (for example, the image acquisition unit 110, the position estimation unit 120, and the control unit 130) of the position estimation device 10. The processor 1020 reads and executes each of the program modules on the memory 1030, so that each function corresponding to the program module is implemented. In addition, the storage device 1040 also functions as the storage unit 140.

The input and output interface 1050 is an interface for connecting the position estimation device 10 and various input and output devices. For example, the position estimation device 10 may communicate with at least one of the imaging device 30 or the speaker 40 through the input and output interface 1050.

The network interface 1060 is an interface for connecting the position estimation device 10 to a network. The network is, for example, a local area network (LAN) or a wide area network (WAN). A method for connecting the network interface 1060 to the network may be a wireless connection or a wired connection. The position estimation device 10 may communicate with at least one of the imaging device 30 or the speaker 40 through the network interface 1060.

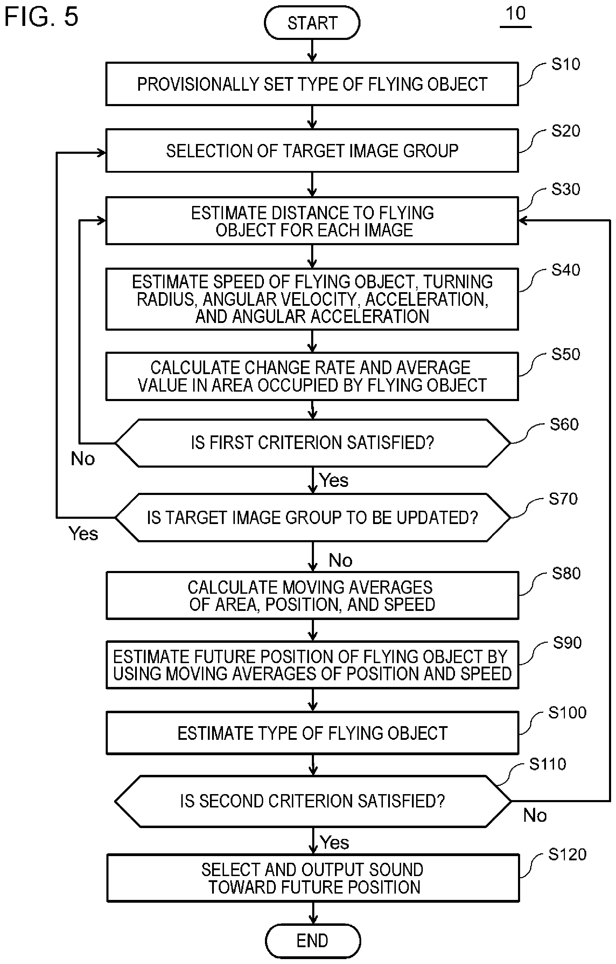

Fig. 5 is a diagram for describing an example of processing performed by the position estimation device 10. In the processing shown in the present diagram, the imaging device 30 generates the repeated images. The imaging device 30 immediately transmits an image to the position estimation device 10 each time the image is generated. The image acquisition unit 110 of the position estimation device 10 acquires the plurality of images and stores the plurality of images in a storage unit, for example, the storage unit 140.

Each time the image acquisition unit 110 acquires a new image, the position estimation unit 120 determines whether or not the image includes the flying object. For the processing, for example, processing of determining whether or not an object that moves in the image is present is used. Then, when the flying object is included, the processing shown in the present figure is started.

First, the position estimation unit 120 provisionally sets the type of the flying object. The processing corresponds to (1) described with reference to Fig. 2. When an animal is provisionally set as the flying object, it is preferable that the type that is set here is specified up to the species of the animal (step S10).

Then, the position estimation unit 120 selects a predetermined number of images from the images stored in the storage unit 140. The predetermined number is at least three, but may be greater than three. Hereinafter, a plurality of images selected here will be referred to as the target image group. The plurality of images constituting the target image group are consecutive in time series, and all include the flying object. For example, when the target image group is constituted with three images, the initially generated target image group is constituted with an image in which the flying object is initially included and two images generated thereafter (step S20). The processing corresponds to (2) described with reference to Fig. 2.

Next, in each of the plurality of images constituting the target image group, the position estimation unit 120 estimates a distance from the imaging device 30 to the flying object at a timing at which the image is captured (step S30). The estimated position of the flying object at a timing at which each image is generated is indicated by the position of the flying object in the image and the distance calculated based on the image. The processing corresponds to (3) described with reference to Fig. 2.

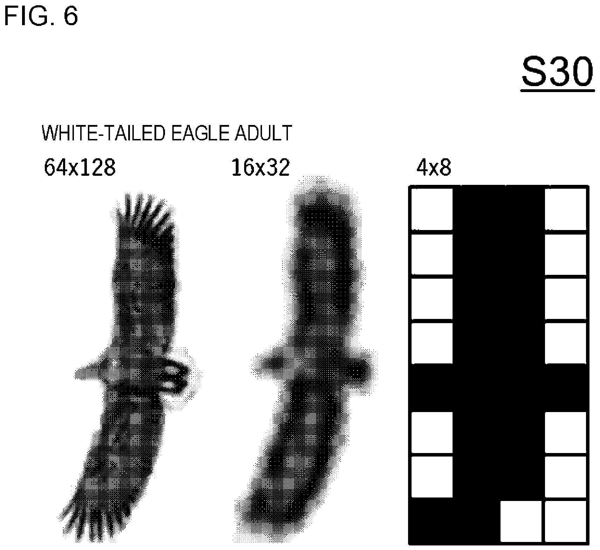

Fig. 6 is a diagram for describing the step S30. When the type of the flying object is specified, the absolute size of the flying object falls within a predetermined range that is set for each type even in consideration of individual differences. Therefore, the proportion of the area occupied by the flying object in the image (for example, the number of pixels) changes depending on the distance from the imaging device 30 to the flying object. Specifically, as the distance from the imaging device 30 to the flying object increases, the proportion of the area occupied by the flying object in the image decreases. The position estimation unit 120 estimates the distance from the imaging device 30 to the flying object by using the relationship.

The proportion of the area occupied by the flying object in the image also changes depending on the focal length of the imaging device 30. Therefore, when the focal length of the imaging device 30 is variable, it is preferable that the position estimation unit 120 uses the focal length of the imaging device 30 when the image is generated, in a case where the distance from the imaging device 30 to the flying object is calculated.

The description returns to Fig. 5. After the step S30, the position estimation unit 120 estimates the speed of the flying object, the turning radius when the trajectory of the flying object is approximated to an arc, the angular velocity, the acceleration, and the angular acceleration by using the position of the flying object at each timing at which each image is captured (step S40). The processing corresponds to (3) and (5) described with reference to Fig. 2.

Two images are required for the estimation of the speed and the angular velocity, and three or more images are required for the estimation of the acceleration and the angular acceleration. Specifically, the position of the flying object calculated in the step S30 indicates the trajectory of the flying object. By using the trajectory, the turning radius of the flying object can be estimated. In addition, when the amount of change in the position of the flying object between at least two images adjacent to each other on the time axis is used, the speed and the acceleration of the flying object can be estimated. In addition, when the turning radius of the flying object and the amount of change in the position of the flying object between the two images are used, the angular velocity and the angular acceleration of the flying object can be estimated. The position estimation unit 120 can perform the estimation shown in the step S40, for example, on images other than an image that is first positioned on the time axis among the plurality of images constituting the target image group.

Next, the position estimation unit 120 calculates a change rate in the area occupied by the flying object calculated in the step S30 and calculates an average value of the areas (step S50). The processing corresponds to (4) described with reference to Fig. 2.

For example, the position estimation unit 120 performs the following processing except for an image positioned last on the time axis among the plurality of images constituting the target image group. First, a ratio of an area of the flying object in the image to an area of the flying object in the next image is set as an area change rate. Then, an average value of the two areas is calculated. The area change rate and the average value are set to be positioned in the middle of the timings at which the two images are generated, on the time axis. When the step S50 is performed, the number of data is decreased by one on the time axis.

The position estimation unit 120 repeats the processing of the step S30 to the step S50 by using the average value of the areas calculated in the step S50 until a first criterion is satisfied (step S60). An example of the first criterion is that the processing of the step S30 to the step S50 is repeated a predetermined number of times.

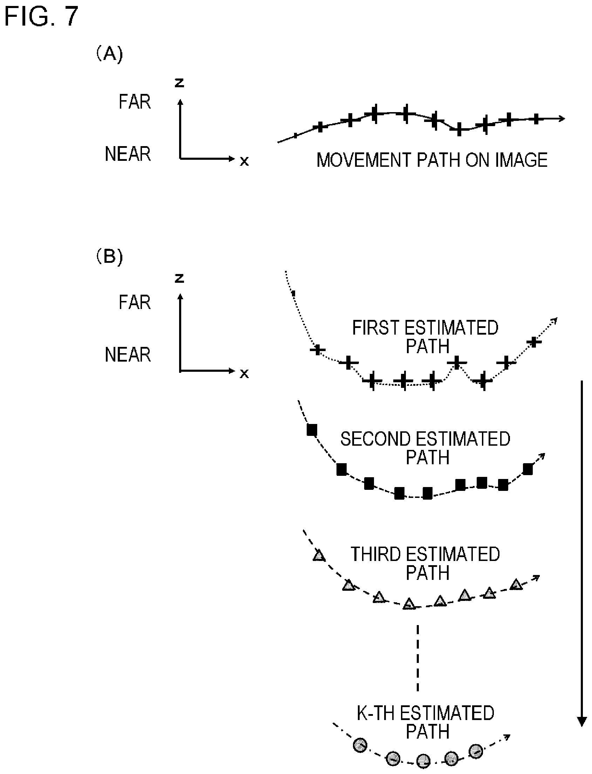

Fig. 7 is a diagram for describing the processing shown in the step S20 to the step S60 of Fig. 5. In the example shown in the present figure, the target image group is constituted with ten images. Then, Fig. 7(A) shows a movement path (trajectory) of the flying object on the image, that is, a trajectory projected on an xy plane, and each diagram of Fig. 7(B) shows a distance from the imaging device 30 to the flying object, that is, an estimated path of the flying object projected on the xz plane. An x-axis and a y-axis indicate two axes constituting the image, and a z-axis indicates a direction away from the imaging device 30 as shown in Fig. 1.

As described above relating to the step S50, when the step S50 is performed, the number of data is one less on the time axis. Therefore, each time the processing shown in the step S20 to the step S50 is repeated, the number of measurement points, that is, the number of measurement timings indicating the estimated movement path is decreased by one. On the other hand, the estimation accuracy of the distance, that is, the estimation accuracy of the position of the flying object is increased.

The description returns to Fig. 6. When the first criterion is satisfied (step S60: Yes), the position estimation unit 120 determines whether or not it is necessary to update the target image group (step S70). An example of a case in which it is necessary to update the target image group is, for example, that there is an image that has not yet been selected as the target image group. In addition, a case where the image acquisition unit 110 acquires a new image from the imaging device 30 is an example of a case where it is necessary to update the target image group. When it is necessary to update the target image group (step S70: Yes), the position estimation unit 120 updates the target image group (step S20) and repeats the processing shown in the step S30 to the step S70.

A method of updating the target image group is a first-in first-out method. That is, the position estimation unit 120 removes an image, which is the oldest in time series among the images included in the current target image group, from the target image group. Then, the position estimation unit 120 specifies the latest image among the images included in the current target image group, and newly adds an image positioned next to the image in time series to the target image group. That is, each target image group corresponds to a timing at which the latest image in the target image group is captured.

Then, the position estimation unit 120 calculates a moving average of each value calculated in the step S40 to the step S50 (step S80). The processing corresponds to the processing performed between (5) and (6) shown in Fig. 2. Then, the position estimation unit 120 estimates the future position of the flying object by using the moving average of the position and the speed (step S90).

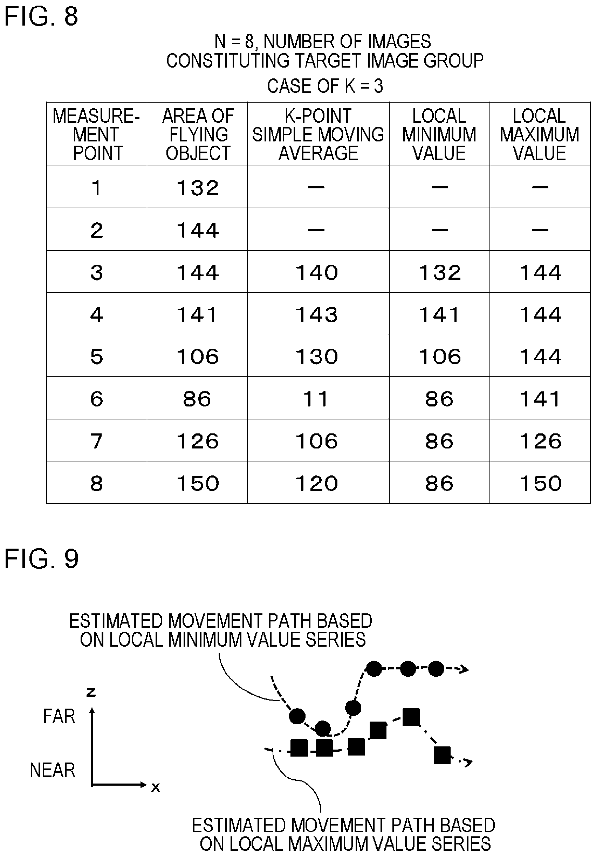

Figs. 8 to 11 are diagrams for describing a detailed example of the step S90.

First, as shown in Fig. 8, the position estimation unit 120 calculates a K-point moving average of the area of the flying object, a local minimum value at the K-point, and a local maximum value at the K-point for each target image group. Specifically, the position estimation unit 120 calculates the K-point moving average of the area of the flying object and associates the calculated average with the most recent image in time series among the images used in calculating the moving average. In addition, the position estimation unit 120 recognizes the area of the flying object in each of K images used when the moving average is calculated. Then, the position estimation unit 120 associates each of the local minimum value and the local maximum value of K areas with the most recent image in time series among the images used when the moving average is calculated. As a result, the local minimum value and the local maximum value of the area are associated with each of the plurality of images.

Then, as shown in Fig. 9, the position estimation unit 120 specifies, for each target image group, an estimated movement path of the flying object based on the local minimum value of the area (hereinafter, referred to as a first estimated movement path) and an estimated movement path based on the local maximum value of the area (hereinafter, referred to as a second estimated movement path). The first estimated movement path indicates a movement path when an estimated distance from the imaging device 30 to the flying object is the maximum value of an estimated range (that is, when the flying object is farthest from the imaging device 30). On the other hand, the second estimated movement path indicates a movement path when the estimated distance from the imaging device 30 to the flying object is the minimum value of the estimated range (that is, when the flying object is closest to the imaging device 30). A range sandwiched between the two estimated movement paths indicates the estimated range of the movement path of the flying object. The flying object flies in the estimated range with a high probability. From the above, the estimated movement path of the flying object can be indicated in a band shape.

Although not shown, the position estimation unit 120 specifies an estimated movement path (hereinafter, referred to as a third estimated movement path) based on the moving average of the area. The third estimated movement path is positioned between the first estimated movement path and the second estimated movement path.

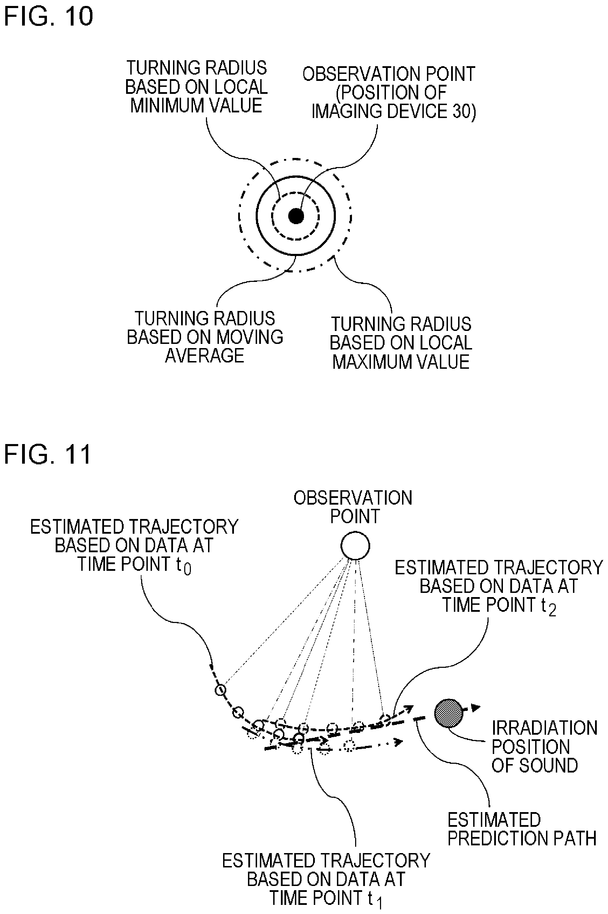

As shown in Fig. 10, the position estimation unit 120 calculates, in each target image group, a turning radius indicating the first estimated movement path (the local minimum value of the area), a turning radius indicating the second estimated movement path (the local maximum value of the area), and a turning radius indicating the third estimated movement path (the moving average of the area).

Then, as shown in Fig. 11, the position estimation unit 120 superimposes the estimated movement paths based on each of the plurality of target image groups. Each of the plurality of target image groups corresponds to a time point (t₀, t₁, t₂, ...) at which the latest image in the target image group is captured.

Each estimated movement path is shown as an arc centered at the position of the imaging device 30 and having a radius based on the third estimated movement path. Then, the position estimation unit 120 estimates the future movement path of the flying object by using the transition of the estimated movement path, and estimates the future position of the flying object by using the movement path. As an example, the position estimation unit 120 can estimate the future position of the flying object by using a Kalman filter. In this case, the future position of the flying object can be predicted although there is a missing value. In addition, the robustness of the prediction of the future position is also improved.

The moving average of each of the position, the speed, and the motion information of the flying object is used for calculating the estimated movement path. Therefore, the moving average of each of the position, the speed, and the motion information of the flying object is substantially used for predicting the future position of the flying object.

In the method shown in Fig. 11, in each estimated movement path, the future position of the flying object may be estimated based on a first estimated latitude path (that is, a path farthest from the imaging device 30), and the future position of the flying object may be estimated based on a second estimated latitude path (that is, a path closest to the imaging device 30). In this case, the position estimation unit 120 may calculate the future position to be actually used by using the two future positions. As an example, the position estimation unit 120 may use an average position of the two future positions as the future position actually used.

The description returns to Fig. 5. After the step S90, the position estimation unit 120 estimates the type of the flying object by using the speed and the area change rate in the flying object (step S100). Both the speed and the area change rate indicate the feature of the movement of the flying object. For example, when the flying object is a bird, the range of the speed is determined by the species of the bird, and the features of the movement of the wing during flapping and the movement during the turning are changed depending on the species of the bird. Therefore, the position estimation unit 120 can specify the type of the flying object by using the speed and the area change rate. Here, when the flying object is an animal, it is preferable that the position estimation unit 120 performs estimation up to the species. The processing corresponds to (6) described with reference to Fig. 2.

Then, when the second criterion is not satisfied (No in step S110), the position estimation unit 120 returns to the step S30. The processing corresponds to (7) described with reference to Fig. 2. Here, the second criterion is, for example, any one of the following (a) or (b).

(a) A loop from the step S30 to the step S110 is repeated a preset number of times.

The criterion is suitable when it is necessary to proceed with the processing by the position estimation unit 120 at a certain speed.

(b) A difference between an estimated position of the flying object at the first timing and a future position of the flying object, which is a future position generated before the first timing (a position at which the flying object is expected to be present at the first timing), is equal to or less than a criterion value.

The criterion indicates that a difference between a predicted result of the future position (corresponding to the future position generated before the first timing among the above) and a measured value (corresponding to the estimated position at the first timing among the above) is equal to or less than the criterion value, and indicates that the accuracy is sufficiently increased.

It is preferable that the above-described second criterion is switchable according to an input from the user, for example.

Thereafter, when the type of the flying object estimated in the step S100 is an animal, the control unit 130 reads out sound data corresponding to the species of the animal from the storage unit 140. In addition, the control unit 130 directs the orientation of the speaker 40 to the future position specified in the step S90. Then, the control unit 130 causes the speaker 40 to output the sound data read out from the storage unit 140 (step S120). In this case, the control unit 130 controls the timing of emitting the sound such that the sound reaches the future position at a timing at which the flying object is expected to reach the future position.

As described with reference to Fig. 1, the sound output from the speaker 40 is a sound for transmitting the predetermined information to the animal. When the information included in the sound is recognized, the animal changes the movement direction according to the information. As a result, the animal does not enter the region that should not be entered. In this case, it is not necessary to intimidate the animal by the size of the sound. Therefore, the size of the sound output from the speaker 40 is smaller than that in related art.

According to the present embodiment, the position and the future position of the flying object can be estimated even with one imaging device. In addition, when the flying object is an animal such as a bird, although the sound output by the speaker 40 is small, the animal can be prevented from entering the region in which the animal should not enter.

### (Modification Example)

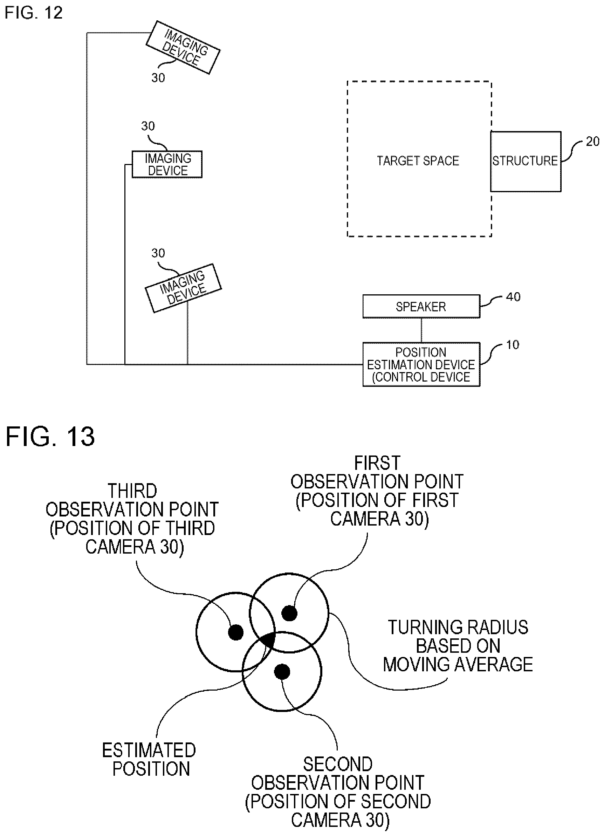

Fig. 12 is a diagram for describing a use environment of the position estimation device 10 according to the present modification example. In the above-described embodiment, the position estimation device 10 is used together with the one imaging device 30. In the present modification example, the position estimation device 10 is used together with a plurality of imaging devices 30, preferably three or more of the imaging devices 30. The plurality of imaging devices 30 are disposed to be separated from each other, and include a target space (or target region) in an imaging range. That is, the plurality of imaging devices 30 image the target space from different directions.

It is preferable that all of the plurality of imaging devices 30 are monocular cameras. In this case, the cost of the imaging device 30 is reduced.

The image acquisition unit 110 of the position estimation device 10 acquires a plurality of images from the plurality of imaging devices 30, and the position estimation unit 120 of the position estimation device 10 calculates information indicating the estimated position of the flying object for each of the plurality of imaging devices 30 and specifies the estimated position of the flying object by using the information for each of the imaging devices 30.

An example of the information indicating the estimated position of the flying object is the turning radius described with reference to Fig. 10. In this case, the position estimation unit 120 performs processing up to the calculation of a turning radius for each of the plurality of imaging devices 30. Then, the position estimation unit 120 specifies the estimated position of the flying object by using the calculation results of the plurality of turning radiuses.

Fig. 13 is a diagram for describing an example of a method of specifying the estimated position of the flying object by the position estimation unit 120. In the example shown in the figure, the position estimation unit 120 calculates the turning radius for each of the plurality of imaging devices 30. Then, the position estimation unit 120 draws a circle centered at the position of the imaging device 30 and having a radius that is a turning radius corresponding to the imaging device 30 for each of the plurality of imaging devices 30. Then, the position estimation unit 120 estimates that the flying object is present at a place in which the plurality of circles overlap each other.

The position estimation unit 120 may calculate the position of the flying object in the real space for each of the plurality of imaging devices 30 by using the distance calculated in the step S30 and the position of the flying object in the image, and may set an average value of the calculation results as the estimated position of the flying object.

In addition, the position estimation unit 120 may calculate the band-shaped estimated movement path shown in Fig. 9 for each of the plurality of imaging devices 30, and may specify the estimated movement path to be actually used by estimating that the flying object is present in a region in which the plurality of estimated movement paths overlap. In this case, since the accuracy of the estimated movement path is increased, the estimation accuracy of the future position of the flying object is also increased.

Then, the position estimation unit 120 specifies a trajectory of the flying object by using the transition of the estimated position, and estimates the future position by using the trajectory. Then, the control unit 130 causes the speaker 40 to emit a sound after the speaker 40 is directed to the future position.

According to the present embodiment, the position estimation device 10 estimates the position of the flying object by using the images captured by the plurality of imaging devices 30. Therefore, the estimation accuracy of the position of the flying object is increased. In addition, all of the plurality of imaging devices 30 can use monocular cameras. Therefore, the estimation accuracy of the position of the flying object can be increased while the cost of the imaging device 30 is suppressed.

Hereinafter, embodiments of the present invention have been described with reference to the drawings; however, these are merely examples of the present invention, and various configurations other than the above-described ones can also be adopted.

In addition, in the plurality of flowcharts used in the above description, a plurality of steps (processes) are described in order. However, the execution order of the steps to be executed in each of the embodiments is not limited to the order of that description. In each of the embodiments, the order of the steps shown in the diagram can be changed within a range that does not affect the content. In addition, the above embodiments can be combined within a range where their contents do not contradict each other.

### REFERENCE SIGNS LIST

10 position estimation device
20 structure
30 imaging device
40 speaker
110 image acquisition unit
120 position estimation unit
130 control unit
140 storage unit

## Claims

1. A position estimation device comprising:
an image acquisition unit that acquires a plurality of images generated by an imaging device that images a target space that is a space in which a flying object flies; and
a position estimation unit that estimates a position of the flying object by processing the plurality of images,
wherein the position estimation unit
(1) provisionally sets a type of the flying object,
(2) specifies three or more of the images arranged in time series as a target image group,
(3) estimates a distance from the imaging device to the flying object for each of a plurality of the images included in the target image group by using the provisionally set type and an area of the flying object in the image belonging to the target image group,
(4) calculates a change rate in the area of the flying object between the plurality of the images included in the target image group,
(5) estimates a speed of the flying object by using the distance to the flying object and a position in the image in each of the plurality of the images included in the target image group,
(6) updates the type of the flying object by using the speed and the change rate in the area, and
(7) performs processing shown in (2) to (6) again by using the type updated in (6) until a predetermined criterion is satisfied, and
an estimated position of the flying object at a timing at which the image is captured is indicated by a position of the flying object in the image and the distance calculated based on the image.

2. The position estimation device according to Claim 1,
wherein the position estimation unit uses a focal length when the imaging device generates the image in (3).

3. The position estimation device according to Claim 1 or 2,
wherein the position estimation unit, in (3), calculates an average value of the areas between the image and at least one other image belonging to the target image group, and estimates the distance using the average value.

4. The position estimation device according to Claim 3,
wherein the position estimation unit
, in (3), further estimates motion information that is at least one of a turning radius, an angular velocity, an acceleration, or an angular acceleration of the flying object, and
estimates a future position of the flying object by using the position, the speed, and the motion information of the flying object.

5. The position estimation device according to Claim 4,
wherein the position estimation unit
, after performing processing shown in (1) to (6) at least once, updates the target image group in (2) each time the image acquisition unit acquires the new image, performs (3) on the target image group after the update,
between (5) and (6),
calculates a moving average of each of the position, the speed, and the motion information of the flying object by using the position, the speed, and the motion information of the flying object repeatedly calculated in (3), and
estimates the future position by using the moving average.

6. The position estimation device according to Claim 4 or 5,
wherein the predetermined criterion is that a difference between the estimated position at a first timing and the future position at the first timing generated before the first timing is equal to or less than a criterion value.

7. The position estimation device according to any one of Claims 1 to 6,
wherein the target space is imaged by a plurality of the imaging devices from different directions,
the image acquisition unit acquires the plurality of images from each of the plurality of imaging devices, and
the position estimation unit calculates information indicating the position of the flying object for each of the plurality of imaging devices and estimates the position of the flying object by using the information.

8. The position estimation device according to any one of Claims 1 to 7,
wherein the imaging device is a monocular camera.

9. The position estimation device according to any one of Claims 1 to 8,
wherein the predetermined criterion is selectable.

10. A position estimation method comprising:
performing, via a computer,
image acquisition processing that acquires a plurality of images generated by an imaging device that images a target space that is a space in which a flying object flies, and
position estimation processing that estimates a position of the flying object by processing the plurality of images,
wherein in the position estimation processing, the computer
(1) provisionally sets a type of the flying object,
(2) specifies three or more of the images arranged in time series as a target image group,
(3) estimates a distance from the imaging device to the flying object for each of a plurality of the images included in the target image group by using the provisionally set type and an area of the flying object in the image belonging to the target image group,
(4) calculates a change rate in the area of the flying object between the plurality of the images included in the target image group,
(5) estimates a speed of the flying object by using the distance to the flying object and a position in the image in each of the plurality of the images included in the target image group,
(6) updates the type of the flying object by using the speed and the change rate in the area, and
(7) performs processing shown in (2) to (6) again by using the type updated in (6) until a predetermined criterion is satisfied, and
an estimated position of the flying object at a timing at which the image is captured is indicated by a position of the flying object in the image and the distance calculated based on the image.

11. A program causing a computer to execute:
an image acquisition function of acquiring a plurality of images generated by an imaging device that images a target space that is a space in which a flying object flies; and
a position estimation function of estimating a position of the flying object by processing the plurality of images,
wherein the position estimation function includes
(1) provisionally setting a type of the flying object,
(2) specifying three or more of the images arranged in time series as a target image group,
(3) estimating a distance from the imaging device to the flying object for each of a plurality of the images included in the target image group by using the provisionally set type and an area of the flying object in the image belonging to the target image group,
(4) calculating a change rate in the area of the flying object between the plurality of the images included in the target image group,
(5) estimating a speed of the flying object by using the distance to the flying object and a position in the image in each of the plurality of the images included in the target image group,
(6) updating the type of the flying object by using the speed and the change rate in the area, and
(7) performing processing shown in (2) to (6) again by using the type updated in (6) until a predetermined criterion is satisfied, and
an estimated position of the flying object at a timing at which the image is captured is indicated by a position of the flying object in the image and the distance calculated based on the image.
